**Europäisches Patentamt**

**European Patent Office**

**Office européen des brevets**

(11) Veröffentlichungsnummer : **0 098 543**
**B1**

## (12) EUROPÄISCHE PATENTSCHRIFT

(45) Veröffentlichungstag der Patentschrift :
12.11.86

(21) Anmeldenummer : 83106426.6

(22) Anmeldetag : 01.07.83

(51) Int. Cl.⁴ : **F 02 B 27/00, F 02 M 35/10**

(54) **Register-Luftansauganlage für Brennkraftmaschinen, insbesondere Mehrzylinder-Einspritz-Brennkraftmaschinen.**

(30) Priorität : 03.07.82 DE 3224946

(43) Veröffentlichungstag der Anmeldung :
18.01.84 Patentblatt 84/03

(45) Bekanntmachung des Hinweises auf die Patenterteilung : 12.11.86 Patentblatt 86/46

(84) Benannte Vertragsstaaten :
**AT DE FR GB IT SE**

(56) Entgegenhaltungen :
**DE-A- 2 815 701**
**FR-A- 1 589 465**
**US-A- 4 263 882**
**US-A- 4 304 211**
**Patent Abstracts of Japan, Band 4, Nr. 64, 14. Mai 1980, Seite 53M11**

(73) Patentinhaber : **BAYERISCHE MOTOREN WERKE**
**Aktiengesellschaft**
**Postfach 40 02 40 Petuelring 130**
**D-8000 München 40 (DE)**

(72) Erfinder : **Gartner, Jurij**
**Parsbergstrasse 12**
**D-8034 Germering (DE)**
Erfinder : **Kaindl, Wolfgang, Ing. grad.**
**Blütenstrasse 21**
**D-8052 Moosburg (DE)**

(74) Vertreter : **Bücken, Helmut et al**
**Bayerische Motoren Werke Aktiengesellschaft Postfach 40 02 40 Petuelring 130 - AJ-30**
**D-8000 München 40 (DE)**

## Beschreibung

Die Erfindung geht gemäß dem Oberbegriff des unabhängigen Patentanspruches von der US-A-4 304 211 aus.

Bei dieser bekannten Bauart sind erste Leitungen eines Leitungssystems im Zylinderkopf baulich integriert ausgebildet. Dagegen sind zweite Leitungen eines weiteren Leitungssystems an die Brennkraftmaschine anschließbar ausgebildet. Nachteilig bei dieser Anordnung ist die baulich feste Zuordnung der ersten Leitungen mit fest vorgegebenen Längen, so daß diese ersten, als Schwingrohre dienenden Leitungen bei einer Motorbaureihe mit unterschiedlichem Leistungsangebot nicht entsprechend angepaßt werden können.

Weiter ist aus der FR-A-1 589 465 eine Register-Luftansauganlage bekannt, deren Leitungssysteme zwar von der Brennkraftmaschine gesondert ausgebildet sind, jedoch miteinander in einstückiger Verbindung stehen. Diese Anordnung läßt nur relativ kurze Schwingrohrlängen zu.

Der Erfindung liegt die Aufgabe zugrunde, die gattungsgemäße Register-Luftansauganlage derart zu gestalten, daß sie ohne großen Aufwand bei geringem zusätzlichen Platzbedarf auf einen Leistungsbereich der Brennkraftmaschine abgestimmt werden kann.

Diese Aufgabe wird mit den kennzeichnenden Merkmalen des Anspruches 1 gelöst. Nach der Erfindung ist die Ansauganlage in zwei Baugruppen aufgeteilt, wobei eine Baugruppe die austauschbaren Schwingrohre umfaßt. Durch die U-förmige Gestaltung dieser Schwingrohre werden bei geringem zusätzlichem Platzbedarf große Längen erzielt, wobei ferner mit der Steckverbindung eine gute Anpassung der Einbauverhältnisse, insbesondere im Motorraum eines Kraftfahrzeuges erreicht wird. Die gesteckte Anordnung der Schwingrohre hat weiter den Vorteil, daß bei einer Motorbaureihe mit verschiedenen Leistungsgruppen die übrige Ansauganlage für alle Motoren verwendet und durch die für eine Leistungsgruppe abgestimmten Schwingrohrleitungen durch einfaches Stecken ergänzt werden kann. Mit den als austauschbare Teile ausgebildeten Schwingrohren läßt sich ein über einen breiten Drehzahlbereich abstimmbares Schwingsystem mit Drehmomentenanhebung über einen großen Drehzahlbereich ohne Einbuße an Höchstleistung verwirklichen.

Mit der im Anspruch 2 beschriebenen Ausgestaltung der Erfindung wird die dieser zugrundeliegende Aufgabe dahingehend unterstützt, daß mit der unmittelbar am Zylinderkopf der Brennkraftmaschine angeordneten Verteilkammer des zweiten Leitungssystems mit großen Leitungsquerschnitten ein großer Spielraum für die Abstimmung der Schwingrohrlängen des ersten Leitungssystems bei kompakter Gestaltung der gesamten Luftansauganlage erreicht wird.

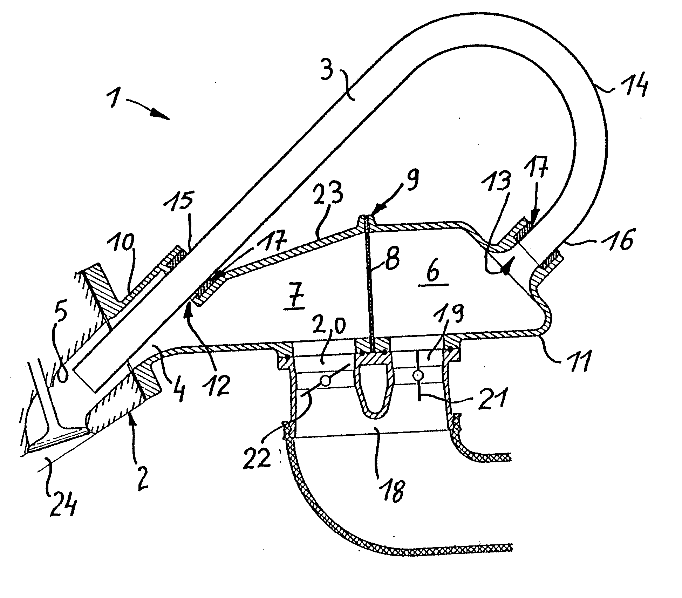

In der Zeichnung ist die Erfindung dargestellt, und zwar ist die Register-Luftansauganlage im Schnitt gezeigt.

Die Register-Luftansauganlage 1 für eine nicht näher dargestellte Mehrzylinder-Einspritz-Brennkraftmaschine 2 umfaßt zwei Leitungssysteme mit paarweise gesonderten Leitungen 3 und 4 von unterschiedlichen Querschnitten zu jedem Einlaßkanal 5 der Maschine 2. Die Leitungen 3 und 4 jedes Leitungssystems münden an ihren maschinen-abgewandten Enden in getrennte Verteilkammern 6 und 7. Diese sind in einem längsgeteilten, eine Trennwand 8 enthaltenden Gehäuse 9 angeordnet.

Die Leitungen 3 des ersten Leitungssystems mit relativ kleinen Querschnitten sind wesentlich länger als die Leitungen 4 des zweiten Leitungssystems mit relativ großen Querschnitten. Die Leitungen 4 sind jeweils als Verbindungsstutzen 10 zwischen dem Einlaßkanal 5 und der maschinennah angeordneten Verteilkammer 7 mit einem in den Einlaßkanal 5 übergehenden Querschnitt ausgebildet. Die Leitungen 3 des ersten Leitungssystems mit mehrfacher Länge der Verbindungsstutzen 10 sind mit der maschinenfern angeordneten Verteilkammer 6 verbunden, die als relativ großvolumiger Luftsammler 11 ausgebildet ist.

Die Verbindungsstutzen 10 weisen Anschlußöffnungen 12 und die Gehäusewand des Luftsammlers 11 bzw. der Verteilkammer 6 weist Anschlußöffnungen 13 für die Leitungen 3 des ersten Leitungssystems auf. Die Leitungen 3 sind aus vom Gehäuse 9 getrennt hergestellten Rohren 14 gebildet, die zur Erzielung einer jeweils mehrfachen Länge der Verbindungsstutzen 10 U-förmig gestaltet sind. Die Leitungen 3 weisen ferner zueinander parallele und am Außenumfang glattwandige Endabschnitte 15 und 16 auf für die zueinander parallel ausgerichteten Anschlußöffnungen 12 und 13 an Verbindungsstutzen 10 und Verteilkammer 6 bzw. Luftsammler 11. In den Anschlußöffnungen 12 und 13 sind die jeweiligen Endabschnitte 15 und 16 der Rohre 14 dicht umschließende Ringe 17 aus elastischem Material angeordnet. Über die als elastische Steckverbindungen dienenden Ringe 17 sind die Endabschnitte 15 und 16 der Leitungen 3 bzw. der Rohre 14 in den Anschlußöffnungen 12 und 13 gehalten.

Am Gehäuse 9 ist ein Register-Drosselklappenstutzen 18 derart angeschlossen, daß jeder der Verteilkammern 6 und 7 jeweils ein Einlaß 19 bzw. 20 mit jeweils einer Drossel 21 bzw. 22 zugeordnet ist.

Eine nicht dargestellte Einspritzdüse gibt Kraftstoff in den Einlaßkanal 5 ab. In diesem kann ferner die Leitung 3 mit dem Endabschnitt 15 außermittig angeordnet sein zur Erzielung einer Turbulenz beim Einströmen der Ladung in den Brennraum 24.

Im unteren Drehzahlbereich der Brennkraftmaschine 2 wird lediglich die Drosselklappe 21 im Einlaß 19 zum relativ großvolumigen Luftsammler 11 geöffnet, der mit den relativ langen Leitungen 3 von relativ kleinen Querschnitten des ersten Leitungssystems in Verbindung steht. Nach Überschreiten der Drehzahl des maximalen Drehmomentes beginnt sich die Drosselklappe 22 im Einlaß 20 zum Luftsammler 23 bzw. zur Verteilkammer 7 zusätzlich zu öffnen. Hierbei strömt die Luft aus dem Luftsammler 23 über das zweite Leitungssystem mit den relativ kurzen Verbindungsstutzen 10 von jeweils einem in den Einlaßkanal 5 übergehenden, relativ großen Querschnit nahezu unmittelbar in den ventilgesteuerten Einlaßkanal 5. Bei Höchstleistung sind beide Drosselklappen 21 und 22 voll geöffnet.

## Patentansprüche

1. Register-Luftansauganlage für Brennkraftmaschinen, insbesondere Mehrzylinder-Einspritz-Brennkraftmaschinen,
   mit zwei Leitungssystemen,
   die paarweise gesonderte Leitungen (3, 10) von unterschiedlichen Querschnitten und Längen zu jedem Einlaßkanal (5) der Maschine (2) aufweisen, wobei
   eine erste Leitung (3) von kleinem Querschnitt und großer Länge als Schwingrohr dient, und
   die ferner für die jeweilige Leitung bzw. Gruppe von Leitungen getrennte Verteilkammern (6, 7) mit je einem Einlaß (19, 20) umfassen, dadurch gekennzeichnet,
   daß die erste Leitung (Schwingrohr 3) als austauschbares Teil U-förmig gestaltet ist mit zueinander parallelen und glattwandigen Endabschnitten (15, 16),
   daß eine zweite Leitung (Verbindungsstutzen 10) und eine Verteilkammer (6) der ersten Leitung (Schwingrohr 3) zueinander etwa parallel ausgerichtete Anschlußöffnungen (12, 13) aufweisen, und
   daß Ringe (17) aus elastischem Material in den Anschlußöffnungen (12, 13) angeordnet sind,
   die zur Halterung der gesteckt angeordneten ersten Leitung (Schwingrohr 3) deren Endabschnitte (15, 16) dicht umschließen.

2. Ansauganlage nach Anspruch 1, dadurch gekennzeichnet,
   daß die erste Verteilkammer (6) maschinenfern angeordnet ist und eine maschinenabgewandte Anschlußöffnung (13) aufweist,
   daß eine zweite Verteilkammer (7) maschinennah mittels der als Verbindungsstutzen (10) ausgebildeten zweiten Leitung angeordnet ist,
   daß beide Verteilkammern (6, 7) in einem längsgeteilten, eine Trennwand (8) enthaltenden Gehäuse (9) angeordnet sind, wobei
   die erste Leitung (Schwingrohr 3) ein mehrfaches an Länge der zweiten Leitung bzw. des Verbindungsstutzens (10) aufweist.

## Claims

1. A register air-suction installation for internal combustion engines, especially multi-cylinder injection-type internal combustion engines,
   having two conduit systems
   which comprise pairs of separate conduits (3, 10) of different cross-sections and lengths to each inlet port (5) of the engine (2), wherein
   a first conduit (3) of small cross-section and greater length serves as a vibrating pipe, and
   which further comprise distributor chambers (6, 7) each having an inlet (19, 20) separated for the respective conduit or group of conduits, characterised
   in that the first conduit (vibrating pipe 3) is formed as a replaceable part of U-shaped configuration with mutually parallel and smooth-walled end sections (15, 16),
   that a second conduit (connector 10) and a distributor chamber (6) of the first conduit (vibrating pipe 3) are provided with connection openings (12, 13) arranged substantially parallel to one another, and
   that rings (17) of resilient material are arranged in the connection openings (12, 13),
   which tightly enclose the pushed-in end sections (15, 16) of the first conduit (vibrating pipe 3) for the retention of this first conduit.

2. A suction installation according to Claim 1, characterised
   in that the first distributor chamber (6) is arranged remote from the engine and has a connection opening (13) facing away from the engine,
   that a second distributor chamber (7) is arranged close to the engine by means of the second conduit formed as the connector (10),
   that both distributor chambers (6, 7) are arranged in a longitudinally-divided housing (9) containing a partition (8), while
   the first conduit (vibrating pipe 3) is several times as long as the second conduit and/or the connector (10) as the case may be.

## Revendications

1. Installation d'admission d'air à papillons pour moteurs à combustion interne, en particulier pour moteurs à combustion interne à injection à plusieurs cylindres,
   comportant deux systèmes de conduites,
   qui présentent, par paire, des conduites séparées (3, 10) de sections et longueurs différentes correspondant à chaque canal d'admission (5) du moteur (2), étant précisé que
   une première conduite (3), de petite section et de grande longueur, sert de tube vibrant, et
   que les chambres de répartition (6, 7), par ailleurs distinctes pour la conduite respective ou le groupe respectif de conduites, comportent chacune une entrée (19, 20), caractérisée
   en ce que la première conduite (tube vibrant 3) est conçue sous forme de pièces à échanger en forme de U, avec des portions d'extrémité (15, 16) parallèles l'une à l'autre et à paroi lisse,

en ce qu'une seconde conduite (tubulure de liaison 10) et une chambre de répartition (6) de la première conduite (tube vibrant 3) présentent des ouvertures de raccordement (12, 13) dirigées à peu près parallèlement l'une à l'autre, et

en ce que des bagues (17) en matériau élastique sont disposées dans les ouvertures de raccordement (12, 13) et, pour maintenir la première conduite (tube vibrant 3) disposée enfichée, enserrent de façon étanche ses portions d'extrémité (15, 16).

2. Installation d'admission selon la revendication 1, caractérisée

en ce que la première chambre de répartition (6) est disposée côté éloigné du moteur et présente une ouverture de raccordement (13) côté opposé au moteur,

en ce qu'une seconde chambre de répartition (7) est disposée, côté proche du moteur, au moyen de la seconde conduite conçue sous forme de tubulure de liaison (10),

en ce que les deux chambres de répartition (6, 7) sont disposées dans un carter (9) divisé longitudinalement et contenant une paroi de division (8), étant précisé que

la première conduite (tube vibrant 3) présente une longueur multiple de celle de la seconde conduite ou de la tubulure de liaison (10).